# EUROPEAN PATENT APPLICATION

(11) **EP 1 752 855 A1**
(43) Date of publication of application: **14.02.2007**
(21) Application number: 04792085.5
(22) Date of filing: 06.10.2004
(51) Int. Cl.: G06F 1/00, G06F 12/14

(54) **INFORMATION PROCESSING DEVICE, ANTI-TAMPER METHOD, AND ANTI-TAMPER PROGRAM**

(30) Priority: 31.05.2004 JP 2004162050
(71) Applicant: Fujitsu Frontech Limited, Inagi-shi, Tokyo 206-8555 (JP)
(72) Inventor: ITO, Yoshinori, c/o FUJITSU FRONTECH LIMITED, Inagi-shi, Tokyo 206-8555 (JP)
(74) Representative: Jones, David Colin
(86) International application number: PCT/JP2004/014729
(87) International publication number: WO 2005/116795

(57) **Abstract**

An information processor includes a security module 2 that stores security data, decrypts a signature on the application using a common key to obtain a first hash, and outputs the obtained first hash; and a main unit 1 that calculates a second hash, which is a hash of the application main body, and outputs a signal to the security module 2 when the first and second hashes differs from each other. The security module 2 deletes the security data in response to the signal received from the main unit 1.

## Description

### Technical Field

The present invention relates to an information processor, a tamper-proof method, and a tamper-proof program that detect modification of software and perform deletion of security data or the like.

### Background Art

A conventional information processor having a security function implements a tamper-proof function for preventing customers from changing settings of the terminal and using the modified terminal for wrong purposes. The tamper-proof function is a mechanism that deletes security data within a security module in the information processor when a tamper (opening/malicious modification) is detected. The security data mentioned here includes a key, data, logic, and the like for security. In a conventional tamper-proof function, a tamper switch for detecting opening of hardware is used. By means of the tamper switch, the tamper function detects a tamper when hardware is opened and then deletes security data to prevent an improper use. This is because the conventional information processors having a security function are system-integrated as a dedicated terminal in which software is not disclosed and ensures high security, and therefore chances of the hardware modification are higher than those of software modification.

For example, Patent Document 1 is known as a conventional technique related to the present invention. Patent Document 1 disclosed in the publication relates to a security system that authenticates a program that has been encrypted using a public key, in which when a malicious program has been detected, its operation is canceled.
Patent Document 1: Japanese Patent Laid-Open No. 2000-322253 (pages 4 to 7, FIG. 1)

The aforementioned conventional tamper-proof function can counter the hardware modification that involves physical opening. However, it is impossible for the conventional tamper-proof function to detect a software attack carried out through rewriting of a Flash ROM (Read Only Memory) or the like. In particular, in the case where a versatile operating system whose specification is published openly is employed, it becomes more likely that the information processor is exposed to the software attack. Thus, the conventional tamper-proof function is ineffective against the software attack.

A method of prohibiting execution of an unauthorized application has been widely used as a mechanism for preventing the software attack. In this method, however, vulnerability of an authorized application may be used to perform an improper operation by an authority corresponding to the vulnerability level. Further, in the case where a kernel or driver is rewritten, the possibility is involved that more serious improper operation such as information leaks is performed.

### Disclosure of the Invention

### Problems to be Solved by the Invention

The present invention has been made to solve the above problems and an object thereof is to provide an information processor, a tamper-proof method, and a tamper-proof program that perform a detection process of an improper operation as well as an authentication process to recognize the improper operation as a tamper and delete security data within a security module.

### Means for Solving the Problems

To solve the above problems, according to a first aspect of the present invention, there is provided an information processor executing an application that can access security data, the application being constituted by combining an application main body and a signature which is obtained by encrypting a hash of the application main body using a common key, the processor comprising: a security module that stores the security data, decrypts the signature using the common key, and outputs the obtained first hash; and a main unit that calculates a second hash, which is a hash of the application main body, outputs a signal to the security module when the first and second hashes differs from each other, and executes the application when the first and second hashes coincide with each other, wherein the security module deletes the security data in response to the signal received from the main unit.

According to a second aspect of the present invention, there is provided an information processor executing an application that can access security data, the application being constituted by adding a signature obtained by using a common key to an application main body according to an access authorization of the application, the processor comprising: a security module that stores the security data, and decrypts the signature using the common key; and a main unit that executes the application and outputs a signal to the security module when an access that is not authorized by the access authorization corresponding to the signature has occurred, wherein the security module deletes the security data in response to the signal received from the main unit.

According to a third aspect of the present invention, there is provided an information processor in which security data can be accessed using a program stored in a Flash ROM, the processor comprising: a security module that stores the security data; and a main unit that executes the program and outputs a signal to the security module when a signal indicating that the Flash ROM has been improperly rewritten is generated, wherein the security module deletes the security data in response to the signal received from the main unit.

In the information processor according to the present invention, the signal indicating the rewriting of the Flash ROM includes Write Enable signal and Chip Select signal.

In the information processor according to the present invention, the signal indicating the rewriting of the Flash ROM is Erase signal or Write protect cancellation signal.

According to a fourth aspect of the present invention, there is provided a tamper-proof method executing an application that can access security data, the application being constituted by combining an application main body and a signature which is obtained by encrypting a hash of the application main body using a common key, the method comprising the steps of: storing the security data; outputting a first hash obtained by decrypting the signature using the common key; calculating a second hash, which is a hash of the application main body, outputting a signal when the first and second hashes differs from each other, and executing the application when the first and second hashes coincide with each other; and deleting the security data upon receiving the signal.

According to a fifth aspect of the present invention, there is provided a tamper-proof method executing an application that can access security data, the application being constituted by adding a signature obtained by using a common key to an application main body according to an access authorization of the application, the method comprising the steps of: storing the security data; decrypting the signature using the common key; executing the application and outputting a signal when an access that is not authorized by the access authorization corresponding to the signature has occurred; and deleting the security data upon receiving the signal.

According to a sixth aspect of the present invention, there is provided a tamper-proof method in which security data can be accessed using a program stored in a Flash ROM, the method comprising the steps of: storing the security data; executing the program and outputting a signal when a signal indicating that the Flash ROM has been improperly rewritten is generated; and deleting the security data upon receiving the signal.

According to a seventh aspect of the present invention, there is provided a tamper-proof program allowing a computer to execute a tamper-proof method that executes an application that can access security data, the application being constituted by combining an application main body and a signature which is obtained by encrypting a hash of the application main body using a common key, the method comprising the steps of: storing the security data; outputting a first hash obtained by decrypting the signature using the common key; calculating a second hash, which is a hash of the application main body, outputting a signal when the first and second hashes differs from each other, and executing the application when the first and second hashes coincide with each other; and deleting the security data upon receiving the signal.

According to an eighth aspect of the present invention, there is provided a tamper-proof program allowing a computer to execute a tamper-proof method that executes an application that can access security data, the application being constituted by adding a signature obtained by using a common key to an application main body according to an access authorization of the application, the method comprising the steps of: storing the security data; decrypting the signature using the common key; executing the application and outputting a signal when an access that is not authorized by the access authorization corresponding to the signature has occurred; and deleting the security data upon receiving the signal.

According to a ninth aspect of the present invention, there is provided a tamper-proof program allowing a computer to execute a tamper-proof method in which security data can be accessed by a program stored in a Flash ROM, the method comprising the steps of: storing the security data; executing the program and outputting a signal when a signal indicating that the Flash ROM has been improperly rewritten is generated; and deleting the security data upon receiving the signal.

The aforementioned tamper-proof program can be recorded onto a computer-readable medium. The computer-readable medium mentioned here includes: a portable recording medium such as a CD-ROM, a flexible disk, a DVD disk, a magneto-optical disk, an IC card; a database that holds a computer program; other computers and their databases; and a transmission medium on a communication line.

### BRIEF DESCRIPTION OF THE DRAWINGS

FIG. 1 is a block diagram showing an example of a configuration of the information processor according to a first embodiment of the present invention;
FIG. 2 is a flowchart showing an application creating process in the information processor according to the first embodiment;
FIG. 3 is a flowchart showing an application authentication process in the information processor according to the first embodiment;
FIG. 4 is a flowchart showing an application creating process in the information processor according to a second embodiment;
FIG. 5 is a flowchart showing an application execution process in the information processor according to the second embodiment;
FIG. 6 is a block diagram showing an example of a configuration of the information processor of a third embodiment; and
FIG. 7 is a flowchart showing a process of detecting improper rewriting of the Flash ROM in the information processor according to the third embodiment.

### Best Mode for Carrying Out the Invention

Embodiments of the present invention will be described below with reference to the accompanying drawings.

### [First Embodiment]

As a first embodiment, an information processor that allows a main unit thereof to check a signature on application and to send a tamper signal (which corresponds to the "signal" according to the present invention) to a security module when the application is improper one to allow the security module to delete security data will be described.

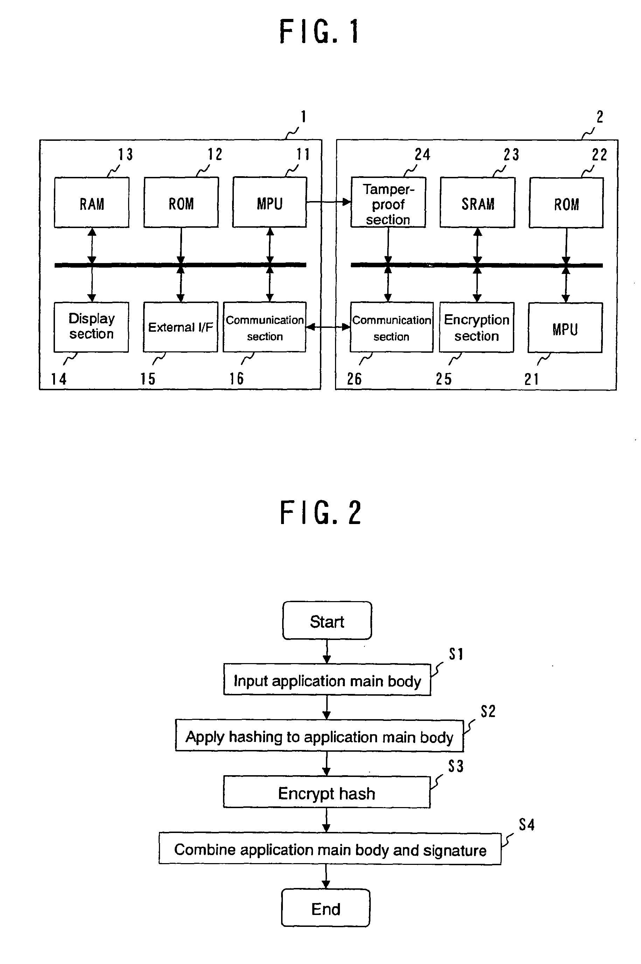

Firstly, a configuration of the information processor according to the first embodiment of the present invention will be described. FIG. 1 is a block diagram showing an example of a configuration of the information processor (tamper-proof information processor or tamper-proof information terminal) according to the first embodiment of the present invention. The information processor of the first embodiment roughly includes a main unit 1 and a security module 2. The main unit 1 includes an MPU (Microprocessing Unit) 11, a ROM 12, a RAM (Random Access Memory) 13, a display section 14, an external I/F (interface) 15, and a communication section 16. The ROM 12 is a Mask ROM or Flash ROM. The security module 2 includes an MPU 21, a ROM 22, an SRAM (Static Random Access Memory) 23, a tamper-proof section 24, an encryption section 25, and a communication section 26. The security module 2 operates at all times on a different power source from the one for the main unit 1.

Each component constituting the main unit 1 is configured to function as follows: the MPU 11 controls the main unit 1; the ROM 12 stores programs such as kernels, drivers, or the like that are needed for operation of the main unit 1 ; the RAM 13 stores installed applications; the display section 14 displays an execution result of application or the like; and the external I/F 15 is connected to an external device and performs data input/output operations.

Each component of the security module 2 is configured to function as follows: the MPU 21 controls the security module 2; the ROM 22 stores programs that are needed for operation of the security module 2; the SRAM 23 stores security data including a common key, data, and logic (the security data can be written onto the SRAM 23 only at a security room); the encryption section 25 encrypts or decrypts the information from the main unit 1 and returns its result to the main unit 1; and the tamper-proof section 24 deletes the security data in the SRAM 23 in response to a received tamper signal, thereby disabling operation of the security module 2 and main unit 1.

The communication section 16 of the main unit 1 and the communication section 26 of the security module 2 exchange hashes, signatures or the like between them.

Next, an application creation process in the information processor according to the first embodiment will be described. FIG. 2 is a flowchart showing the application creating process in the information processor according to the first embodiment. Firstly, the MPU 11 stores an application received from the external I/F 15 into the RAM 13 (S1). The MPU 11 then applies hashing to an application main body, and sends the obtained hash to the security module 2 (S2).

The MPU 21 then allows the encryption section 25 to encrypt the hash using the common key stored in the SRAM 23, and sends the encrypted hash as a signature to the main unit 1 (S3). The MPU 11 then newly stores an application obtained by combining the application main body and the signature into the RAM 13 (S4) and ends this flow.

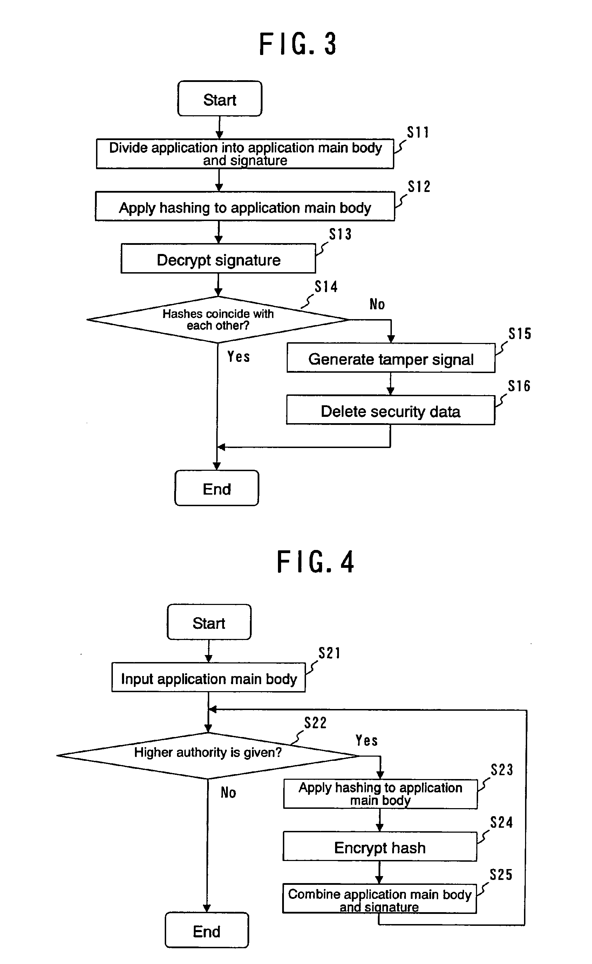

Next, an application authentication process in the information processor according to the first embodiment will be described. FIG. 3 is a flowchart showing the application authentication process in the information processor according to the first embodiment. When the application is started, the MPU 11 firstly divides the application into the application main body and signature, and sends the signature to the security module 2 (S11). The MPU 11 then applies hashing to the application main body (S12). The MPU 21 allows the encryption section 25 to decrypt the signature using the common key stored in the SRAM 23, and sends the obtained hash to the main unit 1 (S13). Then the MPU 11 compares the hash obtained from the application main body and that obtained from the signature and determines whether the two hashes coincide with each other (S14).

When the hashes coincide with each other (Yes in S14), the MPU 11 ends this flow. When the hashes differ from each other (No in S14), the MPU 11 generates a tamper signal and sends it to the security module 2 (S15). Upon receiving the tamper signal, the tamper-proof section 24 deletes security data within the SRAM 23 (S16), and this flow ends.

A tamper-proof function to counter attacks using the vulnerability of software can thus be realized in the aforementioned information processor. The use of a common key in generating an application signature increases computation speed in the encryption and decryption processing, and saves device cost. The common key, which cannot be used no more if it has been leaked, is configured to be used within the security module, which prevents the leakage of the common key.

### [Second Embodiment]

As a second embodiment, an information processor that allows the main unit to provide access authorization corresponding to a signature on the application and to send a tamper signal to the security module when the application has gained unauthorized access and allows the security module to delete the security data will be described.

Firstly, a configuration of the information processor according to the second embodiment will be described. The information processor of the second embodiment has the same configuration as that of the information processor as shown in FIG. 1.

Next, an application creation process in the information processor according to the second embodiment will be described. FIG. 4 is a flowchart showing the application creating process in the information processor according to the second embodiment. Firstly, the MPU 11 stores an application received from the external I/F 15 into the RAM 13 (S21). The MPU 11 then determines whether or not to give higher authority to the application (S22).

When determining that higher authority is given to the application (Yes in S22), the MPU 11 applies hashing to an application main body, and sends the obtained hash to the security module 2 (S23). Then the MPU 21 allows the encryption section 25 to encrypt the hash using the common key stored in the SRAM 23 and sends the encrypted hash as a signature to the main unit 1 (S24). Subsequently, the MPU 11 newly stores an application obtained by combining the application main body and the signature into the RAM 13 (S25) and returns to the process S22. When determining that higher authority is not given to the application (No in S22), the MPU 11 ends this flow.

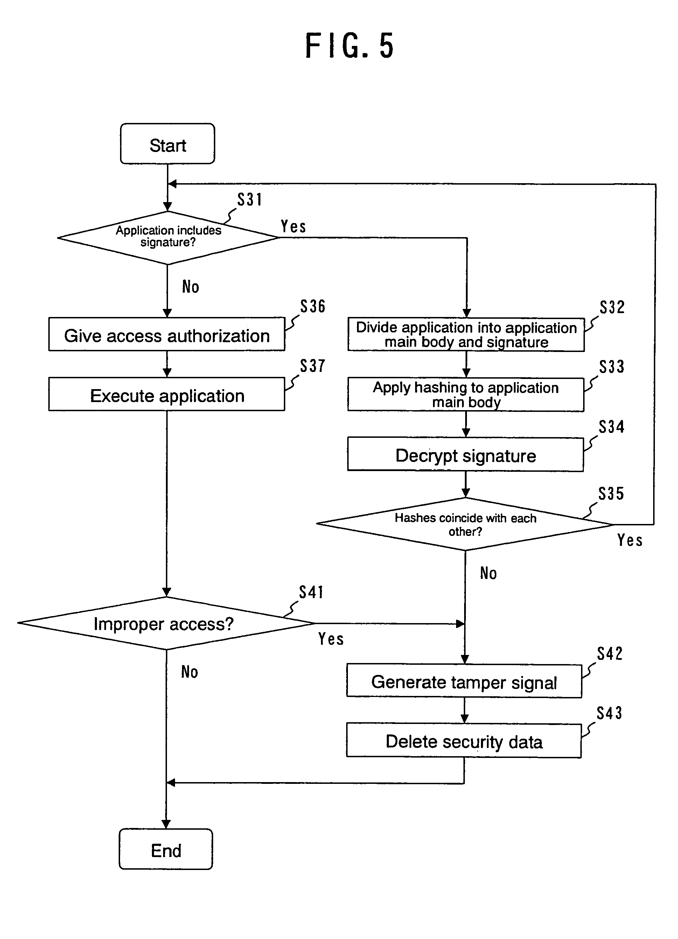

Next, an application execution process in the information processor according to the second embodiment will be described. FIG. 5 is a flowchart showing the application execution process in the information processor according to the second embodiment. When the application is started, firstly the MPU 11 determines as to whether the application stored in the RAM 13 includes signatures that have not been decrypted (S31).

When determining that there exist signatures that have not been decrypted (Yes in S31), the MPU 11 divides the application into the application main body and signature, and sends the signature to the security module 2 (S32). Then the MPU 11 applies hashing to the application main body (S33). The MPU 21 allows the encryption section 25 to decrypt the signature using the common key stored in the SRAM 23, and sends a result of the decryption to the main unit 1 (S34). The MPU 11 compares the hash obtained from the application main body and that obtained from the signature and determines whether the two hashes coincide with each other (S35).

When the two hashes coincide with each other (Yes in S35), the MPU 11 executes the process S31 with respect to other signatures. On the other hand, when the two hashes differ from each other (No in S35), the MPU 11 generates a tamper signal and sends it to the security module 2 (S42). On receiving the tamper signal, the tamper-proof circuit 24 deletes the security data in the SRAM 23 (S43) and ends this flow.

When determining, in the process S31, that the application includes no decrypted signature (No in S31), the MPU 11 gives access authorization corresponding to contents of the decrypted signature to the application (S36). For example, in the case where the application includes no signature, the MPU 11 gives, to the application, access authentication to data or I/O that is not associated with security; in the case where the application includes "signature 1 ", the MPU 11 gives, to the application, additional access authentication to data or I/O that has been set to security level 1; and in the case where the application includes "signature 2", the MPU 11 gives, to the application, additional access authentication to data or I/O that has been set to security level 2.

Then the MPU 11 executes the application (S37), and determines whether an unauthorized access occurs by monitoring the application (S41).

When determining that no unauthorized access has occurred, the MPU 11 ends this flow (No in S41). On the other hand, when determining that an unauthorized access has occurred, the MPU 11 shifts to the process S42.

As described above, the configuration of the aforementioned information processor can eliminate the process of giving the signature in the security room with respect to the application that accesses only to data or I/O that is not associated with security. As a result, it is possible to significantly reduce product cost as compared to the method in which the signature must be given to every application. Further, it is possible to give an appropriate access authorization in advance for each application.

### [Third Embodiment]

As a third embodiment, an information processor that allows the main unit to send a tamper signal when a Flash ROM holding kernels or drivers is improperly rewritten, and allows the security module to delete the security data will be described.

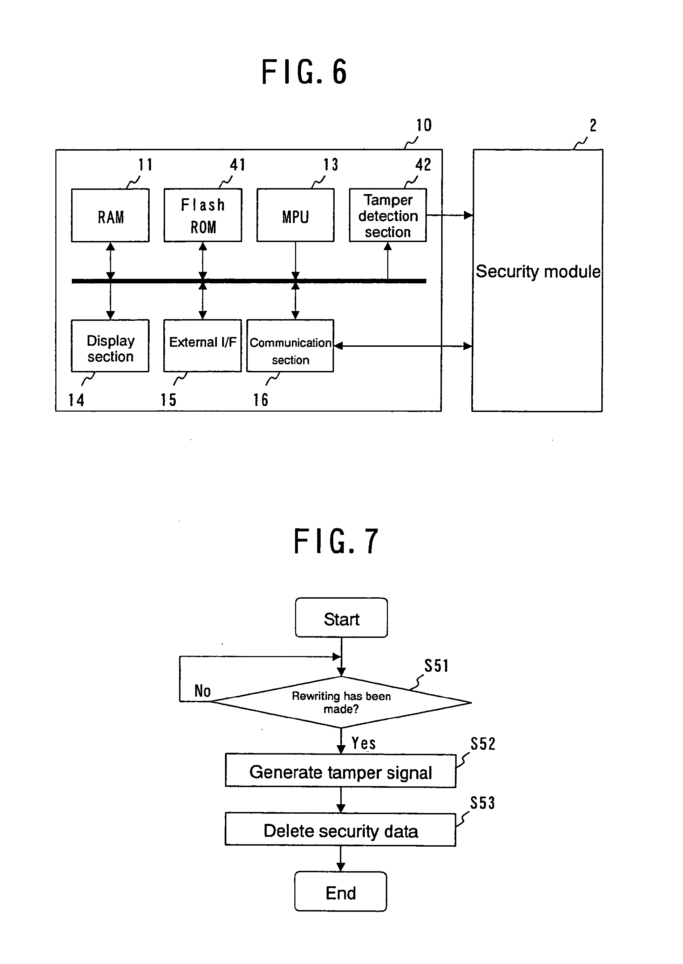

Firstly, a configuration of the information processor according to the third embodiment will be described. FIG. 6 is a block diagram showing an example of a configuration of the information processor of the third embodiment. In FIG. 6, the same reference numerals denote the same or corresponding parts as in FIG. 1, and the descriptions thereof will be omitted. As shown in FIG. 6, the information processor of the third embodiment includes a main unit 10 in place of the main unit 1. The main unit 10 has a Flash ROM 41 in place of the ROM 12, and newly has a tamper detection section 42. The tamper detection section 42 monitors the Flash ROM 41 to determine whether the Flash ROM is improperly rewritten. When determining that the Flash ROM has been rewritten, the tamper detection section 42 outputs a tamper detection signal to the tamper-proof section 24.

Next, a process of detecting improper rewriting of the Flash ROM in the information processor according to the third embodiment will be explained. FIG. 7 is a flowchart showing a process of detecting improper rewriting of the Flash ROM in the information processor according to the third embodiment. The tamper detection section 42 monitors Write Enable signal and Chip Select signal of the Flash ROM 41 to determine whether rewriting has been done to the Flash ROM 41 (S51). In this case, the tamper detection section 42 determines that the Flash ROM 41 has been rewritten when both Write Enable signal and Chip Select signal of the Flash ROM 41 become active. When determining that the Flash ROM 41 has not been rewritten (No in S51), the tamper detection section 42 returns to the process S41, where it continues to monitor the Flash ROM 41. On the other hand, when determining that rewriting has been done to the Flash ROM 41 (Yes in S51), the tamper detection section 42 generates a tamper signal and sends it to the security module 2 (S52). On receiving the tamper signal, the tamper-proof section 24 deletes the security data stored in the SRAM 23 (S53), and the tamper detection section 42 ends this flow.

In the third embodiment, as described above, the tamper detection section 42 monitors Write Enable signal and Chip Select signal. Alternatively, however, the tamper detection section 42 may monitor Erase signal or Write Protect cancellation signal with respect to the Flash ROM 41. In this case, when detecting Erase signal or Write Protect cancellation signal, the tamper detection section 42 determines that the Flash ROM 41 has been written and generates a tamper signal.

As described above, the information processor can prevent improper rewriting of the Flash ROM. Further, the increased security of the Flash ROM allows basic software such as kernels or drivers to be stored in the Flash ROM, which significantly reduces update cost or the like as compared to the case where the basic software is stored in a Mask ROM.

### Industrial Applicability

As described above, according to the present invention, a tamper-proof function to counter attacks using vulnerability of software can be obtained. The use of a common key in generating an application signature increases computation speed in the encryption and decryption processing, and saves device cost. The common key, which cannot be used no more if it has been leaked, is configured to be used within the security module, which prevents the leakage of the common key.

Further, according to the present invention, it is possible to eliminate a process of giving the signature in the security room with respect to the application that accesses only to data or I/O that is not associated with security. As a result, it is possible to significantly reduce product cost as compared to the method in which the signature must be given to every application. Further, it is possible to give an appropriate access authorization in advance for each application.

Further, according to the present invention, it is possible to prevent improper rewriting of the Flash ROM. Further, the increased security of the Flash ROM allows basic software such as kernels or drivers to be stored in the Flash ROM, which significantly reduces update cost or the like as compared to the case where the basic software is stored in a Mask ROM.

## Claims

1. An information processor executing an application that can access security data,
the application being constituted by combining an application main body and a signature which is obtained by encrypting a hash of the application main body using a common key,
the processor comprising:
a security module that stores the security data, decrypts the signature using the common key, and outputs the obtained first hash; and
a main unit that calculates a second hash, which is a hash of the application main body, outputs a signal to the security module when the first and second hashes differs from each other, and executes the application when the first and second hashes coincide with each other, wherein
the security module deletes the security data in response to the signal received from the main unit.

2. An information processor executing an application that can access security data,
the application being constituted by adding a signature obtained by using a common key to an application main body according to an access authorization of the application,
the processor comprising:
a security module that stores the security data, and decrypts the signature using the common key; and
a main unit that executes the application and outputs a signal to the security module when an access that is not authorized by the access authorization corresponding to the signature has occurred, wherein
the security module deletes the security data in response to the signal received from the main unit.

3. An information processor in which security data can be accessed using a program stored in a Flash ROM, comprising:
a security module that stores the security data; and
a main unit that executes the program and outputs a signal to the security module when a signal indicating that the Flash ROM has been improperly rewritten is generated, wherein
the security module deletes the security data in response to the signal received from the main unit.

4. The information processor according to claim 3, wherein
the signal indicating the rewriting of the Flash ROM includes Write Enable signal and Chip Select signal.

5. The information processor according to claim 3, wherein
the signal indicating the rewriting of the Flash ROM is Erase signal or Write protect cancellation signal.

6. A tamper-proof method executing an application that can access security data,
the application being constituted by combining an application main body and a signature which is obtained by encrypting a hash of the application main body using a common key,
the method comprising the steps of:
storing the security data;
outputting a first hash obtained by decrypting the signature using the common key;
calculating a second hash, which is a hash of the application main body, outputting a signal when the first and second hashes differs from each other, and executing the application when the first and second hashes coincide with each other; and
deleting the security data upon receiving the signal.

7. A tamper-proof method executing an application that can access security data,
the application being constituted by adding a signature obtained by using a common key to an application main body according to an access authorization of the application,
the method comprising the steps of:
storing the security data;
decrypting the signature using the common key;
executing the application and outputting a signal when an access that is not authorized by the access authorization corresponding to the signature has occurred; and
deleting the security data upon receiving the signal.

8. A tamper-proof method in which security data can be accessed using a program stored in a Flash ROM, comprising the steps of:
storing the security data;
executing the program and outputting a signal when a signal indicating that the Flash ROM has been improperly rewritten is generated; and
deleting the security data upon receiving the signal.

9. A tamper-proof program allowing a computer to execute a tamper-proof method that executes an application that can access security data,
the application being constituted by combining an application main body and a signature which is obtained by encrypting a hash of the application main body using a common key,
the method comprising the steps of:
storing the security data;
outputting a first hash obtained by decrypting the signature using the common key;
calculating a second hash, which is a hash of the application main body, outputting a signal when the first and second hashes differs from each other, and executing the application when the first and second hashes coincide with each other; and
deleting the security data upon receiving the signal.

10. A tamper-proof program allowing a computer to execute a tamper-proof method that executes an application that can access security data,
the application being constituted by adding a signature obtained by using a common key to an application main body according to an access authorization of the application,
the method comprising the steps of:
storing the security data;
decrypting the signature using the common key;
executing the application and outputting a signal when an access that is not authorized by the access authorization corresponding to the signature has occurred; and
deleting the security data upon receiving the signal.

11. A tamper-proof program allowing a computer to execute a tamper-proof method in which security data can be accessed by a program stored in a Flash ROM, the method comprising the steps of:
storing the security data;
executing the program and outputting a signal when a signal indicating that the Flash ROM has been improperly rewritten is generated; and
deleting the security data upon receiving the signal.
